# EUROPEAN PATENT APPLICATION

(11) **EP 4 748 670 A1**
(43) Date of publication of application: **27.05.2026**
(21) Application number: 24214303.0
(22) Date of filing: 20.11.2024
(51) Int. Cl.: B60T 17/22, F16D 65/00

(54) **METHOD FOR DETERMINING A NEED FOR CLEANING A BRAKE DISC OR A BRAKE DRUM, METHOD FOR OPERATING A BRAKE SYSTEM, DATA PROCESSING DEVICE, COMPUTER PROGRAM, COMPUTER READABLE STORAGE MEDIUM, AND VEHICLE**

(71) Applicant: Volvo Car Corporation, 405 31 Göteborg (SE)
(72) Inventor: HARADA DONATO, Graziele, 40531 Göteborg (SE); YANG, Jingshuang, 40531 Göteborg (SE); DAMBERG, William, 40531 Göteborg (SE); BIVEBY, Richard, 40531 Göteborg (SE); JOHANSSON, Staffan, 40531 Göteborg (SE)
(74) Representative: Kransell & Wennborg KB

(57) **Abstract**

The disclosure relates to a method for determining a need for cleaning a brake disc (18) or a brake drum. In a first step of this method first data (54) indicative of an environmental condition of the brake disc (18) or the brake drum is obtained. Additionally, one method for estimating a corrosion condition of the brake disc (18) or the brake drum out of at least two methods for estimating a corrosion condition of the brake disc (18) or the brake drum is selected based on the first data (54). In a further step, second data (51) indicative of a corrosion condition of the brake disc (18) or the brake drum is obtained using the selected method for estimating a corrosion condition of the brake disc (18) or the brake drum. Subsequently, a need for cleaning the brake disc (18) or the brake drum is obtained based on the second data (S4). Additionally, a method for operating a brake system is presented which comprises determining a need for cleaning a brake disc or a brake drum. Moreover, a data processing device is explained. Further, a computer program and a computer-readable storage medium is presented. Additionally, a vehicle comprising said data processing device is explained.

## Description

### TECHNICAL FIELD

The present disclosure relates to a method for determining a need for cleaning a brake disc or a brake drum.

The disclosure is additionally directed to a method for operating a brake system comprising a brake disc or a brake drum.

Furthermore, the disclosure is about a data processing device comprising means for carrying out at least one of the methods mentioned above.

Moreover, the disclosure is about a computer program comprising instructions which, when the program is executed by a computer, cause the computer to carry out at least one of the methods mentioned above.

Further, the disclosure is about a computer-readable storage medium comprising instructions which, when executed by a computer, cause the computer to carry out at least one of the methods mentioned above.

In addition, the disclosure is about a vehicle comprising a data processing device mentioned above.

### BACKGROUND ART

In electric vehicles, a deceleration can be performed in two ways. In a first alternative, a so-called foundation brake is used. In case the foundation brake comprises a disc brake, this means that brake pads are pressed against corresponding brake discs connected to the vehicle's wheels. In the case the foundation brake comprises a drum brake, the brake shoes are pressed against the brake drum. The friction between the brake pads and the brake discs respectively between the brake shoes and the brake drums leads to a deceleration of the vehicle. A foundation brake can also be called a mechanical brake or a friction brake. In a second alternative, an electric traction machine is operated as a generator being driven by the vehicle's wheels and such that kinetic energy of the vehicle is transformed into electric energy being fed into an electric storage device. Thus, the vehicle is decelerated by recuperating kinetic energy in the form of electric energy. For this reason, this kind of deceleration can also be called recuperative braking or recuperation braking.

In this context, an electric vehicle can be a battery electric vehicle or a hybrid electric vehicle.

Since the recuperated energy is rendered available for a subsequent driving activity, e.g. acceleration, recuperative braking has a positive effect on the electric range and the overall energy efficiency of the electric vehicle. The friction energy generated in a foundation brake usually cannot be recuperated. In simplified words, it is lost. Therefore, known driving strategies of electric vehicles have the objective of using the foundation brake as little as possible. However, this results in the problem of corrosion on the brake discs or brake drums, e.g. corrosion spots forming thereon.

Known solutions to this problem suggest to increase usage level of the foundation brake as a means to remove the corrosion.

If the foundation brake comprises a disc brake which is used, the abrasive surface of the brake pads is expected to remove the corrosion accumulated on the brake disc, i.e. to clean the brake disc. If the foundation brake comprises a drum brake which is used, the abrasive surface of the brake shoes is expected to remove the corrosion accumulated on the brake drum, i.e. clean the brake drum. In both cases, this solution has a negative effect on the range and energy efficiency of the electric vehicle since the friction energy used for cleaning the brake disc or brake drum cannot be recuperated.

### SUMMARY

An objective of the present disclosure is, therefore, to provide a solution to the problem of corrosion on the brake disc or the brake drum which affects energy efficiency of the electric vehicle in a comparatively moderate manner.

The problem is at least partially solved or alleviated by the subject matter of the independent claims of the present disclosure, wherein further examples are incorporated in the dependent claims.

The problem is at least partially solved or alleviated by a method for determining a need for cleaning a brake disc. The method comprises:
- obtaining first data indicative of an environmental condition of the brake disc,
- selecting one method for estimating a corrosion condition of the brake disc or the brake drum out of at least two methods for estimating a corrosion condition of the brake disc or the brake drum based on the first data,
- obtaining second data indicative of a corrosion condition of the brake disc or the brake drum using the selected method for estimating a corrosion condition of the brake disc, and
- obtaining a need for cleaning the brake disc or the brake drum based on the second data.

The general observation underlying the method for determining a need for cleaning a brake disc or a brake drum is that the corrosion of the brake disc or the brake drum is significantly dependent on environmental factors. If the environmental factors are not taken into account, the assessment of the corrosion condition of the brake disc or the brake drum is affected by a certain error. This may lead to the fact that a need for cleaning a brake disc or a brake drum is determined prematurely or when already overdue. If the need is determined prematurely, the cleaning is performed too often. As a consequence thereof, the energy recuperation potential is not fully used which leads to reduced energy efficiency. If the need is determined when it is overdue, inadequate cleaning is performed, e.g. cleaning to an insufficient extent. As a consequence thereof, the brake disc or the brake drum may produce a unwanted brake drag, a wire brush noise, stiction between the frictional surfaces of the brake disc and the brake pad, a squeaking noise, a rubbing noise and/or vibrations, which can be felt by the user. It is also possible that a lack of cleaning leads to damages on the brake disc or the brake drum caused by corrosion. Moreover, it has been found that different methods for estimating a corrosion condition have allow for different levels of precision when estimating the corrosion condition. In this context, the precision of a specific method for estimating a corrosion condition is dependent on an environmental condition of the brake disc. In other words, in different environmental conditions, different methods for estimating a corrosion condition may be best suitable for providing a precise estimation. It is noted that a method for estimating a corrosion condition sometimes is also described as using a corrosion formation model. The general idea underlying the present disclosure is, thus, to determining a need for cleaning a brake disc or a brake drum taking into account environmental conditions and using the most appropriate method for estimating a corrosion condition based on the environmental conditions. Therefore, the selection of the method for estimating the corrosion condition of the brake disc or the brake drum is based on the first data, which indicate an environmental condition. Depending on the environmental condition, a method for estimating a corrosion condition can be used, which estimates the environmental conditions to which the brake disc or the brake drum is exposed with high precision. This, in turn, allows the corrosive state of the disc brake to be estimated accurately and a need for cleaning may be determined precisely. Thus, the energy efficiency of the electric vehicle is kept on a comparatively high level while effective cleaning is ensured. In other words, the brake disc or the brake drum may be cleaned neither prematurely nor overdue.

It is noted that the method according to the present disclosure may be executed for each wheel of the vehicle individually, i.e. for each of the brake discs individually. It is also conceivable, for example, that a need for cleaning the brake discs or brake drums may be obtained for at least one brake disc or at least one brake drum of the front axle or for at least one brake disc or at least one brake drum of the rear axle. Alternatively, it is also conceivable, for example, that a need for cleaning the brake disc or the brake drum may be obtained for both the brake discs or the brake drums of the front axle and/or the brake discs or the brake drums of the rear axle. Furthermore, a variation of levels for a need for cleaning the brake discs or brake drums between the different brake discs and/or brake drums is also possible. For example, a need for cleaning the brake discs or brake drums can be 10 % for the front left brake disc or brake drum, 20 % for the front right brake disc or brake drum, 100 % for the rear left brake disc or brake drum and 0 % for the rear right brake disc or brake drum. These values are only examples and can be determined individually for each brake disc or brake drum and vary independently of each other.

It is noted that in the context of the present disclosure, obtaining means determining or receiving.

In an example, the method may be executed when starting the vehicle. This means that the method for estimating a corrosion condition of the brake disc or the brake drum is executed in the instant that the vehicle is started or before, wherein the vehicle is stationary at this moment. With this, all data that can be used as functional decision basis (e.g. weather prognosis). Further it is conceivable that the method is executed before a predicted starting of the vehicle with a predefined time margin before the predicted starting. This can be done, for example, if the method cannot be executed when starting the vehicle. With this approach it is still possible that most of the available data will be used as a functional decision basis. Moreover, the method may not be executed when starting the vehicle if the traction battery is low.

According to an example, it is possible that the method for estimating a corrosion condition can be calculated on an external source (e.g. a cloud service) at any time.

In an example, the first data may be indicative of an ambient temperature and/or an ambient temperature history. In this context, an ambient temperature may be a current ambient temperature. An ambient temperature history may refer to an ambient temperature from a past time. The ambient temperature history may comprise one or more temperature values. In an example in which the ambient temperature history comprises a single temperature value, the ambient temperature history may comprise a temperature value indicative of an average temperature relating to a past time. In an example in which the ambient temperature history comprises a plurality of temperature values, the ambient temperature history may be indicative of a plurality of temperature values, e.g. forming a time series. Thus, the ambient temperature history may be indicative of changes in temperature over time, e.g. in the form of a temperature profile. Further, the first data may be indicative of one or more predicted, measured or estimated value of: a level of humidity, a galvanic potential, an amount of pollutants, an amount of contamination elements, an amount of wear of components, a remaining thickness of surface coatings or material transformations, a friction coefficient, and/or an amount of condensation. The first data may be obtained from sensors in the vehicle. Alternatively or additionally, the first data may be obtained from cloud data. Cloud data may comprise information related to ambient temperature, SO2, relative humidity, GPS location and/or altitude. The first data may be obtained from cloud data supplied in real time. Consequently, based on the first data an appropriate method for estimating a corrosion condition may be selected. Based thereon, a corrosion condition of the brake disc or the brake drum may be obtained with high precision.

In an example, the ambient temperature history covers the time period from the end of the last or previous driving cycle to the time when a new drive cycle is started. In other words, the ambient temperature history covers the temperature while the vehicle was not used. It has been found that this time period has a significant influence on the formation of corrosion on the brake disc or the brake drum and, thus, on a method for estimating a corrosion condition that offers high precision results.

In an example in which the first data is indicative of an ambient temperature, a limit value or temperature threshold may be defined and the method for estimating a corrosion condition of the brake disc or the brake drum may be selected based on the temperature threshold. In this context, the limit value may be 0°C. Thus, if the ambient temperature is below the limit value a first method for estimating a corrosion condition of the brake disc or the brake drum is selected. This method may be referred to as winter method or winter mode. If the ambient temperature is above the limit value a second method for estimating a corrosion condition of the brake disc or the brake drum is selected. This method may be referred to as summer method or summer mode.

In an example in which the first data is indicative of an ambient temperature and an ambient temperature history, the selection of the method may be carried out as follows. A first limit value, a second limit value, a first switching value and a second switching value may be defined. All these values are temperature values. If the ambient temperature is below the first limit value, for example 0 °C, a first method for estimating a corrosion condition of the brake disc or the brake drum is selected. In this case, the ambient temperature history may be ignored. If the ambient temperature history includes ambient temperature values that are lower than the assigned first limit value and also ambient temperature values that are between the first limit value and the first switching value, for example 10 °C, also the first method for estimating a corrosion condition of the brake disc or the brake drum may be selected. This may be referred to as winter mode. If the ambient temperature is above the second limit value, for example 10 °C, a second method for estimating a corrosion condition of the brake disc or the brake drum is selected. Also in this case, the ambient temperature history may be ignored. If the ambient temperature history includes ambient temperature values that exceed the second limit value, but also includes ambient temperature values that are between the second switching value, for example 0 °C, and the second limit value, also the second method for estimating a corrosion condition of the brake disc or the brake drum may be selected. This may be referred to as summer mode. Altogether, an appropriate method for estimating a corrosion condition of the brake disc or the brake drum may be selected based on the ambient temperature and/or based on the ambient temperature history.

In an example, each of the at least two methods for estimating a corrosion condition of the brake disc or the brake drum may comprise using a corrosion formation model. The corrosion formation model may be configured for estimating an amount of corrosion based on one or more input parameters indicative of an environmental condition of the brake disc. In this context, the first data may be used as an input for the corrosion formation model. A corrosion formation model is a collection of rules and/or formula allowing to determine an amount of corrosion based on the input parameters. Consequently, using such a corrosion formation model, the amount of corrosion may be determined with high reliability and precision.

The at least two methods for estimating a corrosion condition respectively the corrosion formation model may be adapted according to the needs of the customer and the specific needs of the market. In the case a method for estimating a corrosion condition respectively the corrosion formation model does not reflect the actual existing corrosion, it may be adapted at a workshop or by the customer. It is conceivable that the workshop and/or the customer can decide which of the brakes should be cleaned more or less, for example.

In an example, the corrosion formation model is a chemical model or is based on a chemical model that may be used for estimating the amount of corrosion being formed. Alternatively, a look-up table may be used for the same purpose. The look-up table may for example be generated in a laboratory or during tests under predefined conditions.

In an example, the at least two methods for estimating a corrosion condition of the brake disc or the brake drum may differ in the consideration of ambient humidity for estimating the corrosion condition. Alternatively or additionally, the at least two methods for estimating a corrosion condition of the brake disc or the brake drum may also differ in the consideration of ambient salt for estimating the corrosion condition. If the at least two methods for estimating a corrosion condition of the brake disc or the brake drum differ in the consideration of ambient humidity for estimating the corrosion condition, one of the at least two methods may consider the ambient humidity to be 100%, e.g., if rain is detected and up to 60% if no rain is detected. It is also conceivable that that the ambient humidity is taken into account. Accordingly, if the ambient temperatures exceed a limit value or temperature threshold and/or if the ambient temperature history includes ambient temperature values that exceed the limit value or temperature threshold, a method for estimating a corrosion condition may be selected which considers ambient humidity. The other one of the at least two methods may assume that the ambient humidity is 0%. This comes back to ignoring the ambient humidity. Thus, it is conceivable that the ambient humidity is not at all taken into account, e.g., if the ambient temperature is below a limit value or temperature threshold and/or if the ambient temperature history includes ambient temperature values that are lower than a limit value or temperature threshold.

Alternatively or additionally, the at least two methods for estimating a corrosion condition of the brake disc or the brake drum may differ in the consideration of the location of parking the car, in particular, whether the car is parked indoors or outdoors.

In a case in which the methods for estimating a corrosion condition of the brake disc or the brake drum differ in the consideration of ambient salt for estimating the corrosion condition, it is conceivable that salt is taken into account if the ambient temperature is below a limit value or temperature threshold and/or if the ambient temperature history includes ambient temperature values that are lower than a limit value or temperature threshold. Similarly, ambient salt may not be taken into account if the ambient temperatures exceed a limit value or temperature threshold and/or if the ambient temperature history includes ambient temperature values that exceed the limit value or temperature threshold. Thus, an appropriate method for estimating a corrosion condition may be selected based on the relevant environmental conditions.

In an example, all of the at least two methods for estimating a corrosion condition of the brake disc or the brake drum may consider an ambient temperature. It has been found that the ambient temperature is an important influencing factor when estimating the formation of corrosion, so it is particularly advantageous to take this into account, especially in the corrosion formation model. Consequently, the corrosion of the brake disc or the brake drum may be determined particularly accurately by taking into account the ambient temperature.

In another example, all of the at least two methods for estimating a corrosion condition of the brake disc or the brake drum may be configured for estimating a thickness of a corrosion layer on the brake disc. A thickness of a corrosion layer on the brake disc or the brake drum may be representative of the state of corrosion of the brake disc. Furthermore, the estimated thickness of a corrosion layer on the brake disc or the brake drum may be used as a basis to estimate how much the foundation brake would have to be used so that the abrasive surface of the brake pads removes the corrosion layer on the brake disc, to clean the brake disc. Thus, the thickness of the corrosion layer not only is a highly descriptive parameter but also is a parameter that is well suitable for further processing. In an example, the method may further comprise obtaining third data indicative of a decrease of a corrosion condition of the brake disc or the brake drum using a method for estimating a corrosion condition decrease. The method for estimating a corrosion condition decrease allows to take into account that the corrosion on the brake disc or the brake drum also decreases in the drive cycle by using the foundation brake. In other words, the corrosion on the brake disc or the brake drum using the foundation brake in the drive cycle is reduced. This in turn is taken into account by the method for estimating a corrosion condition decrease. In this context, the foundation brake, more precisely the brake energy of the foundation brake may be used to remove the corrosion. The brake energy of the foundation brake is a function of a normal brake force between the brake pads and the corresponding brake disc or the brake drum taking the friction coefficient into account, the brake torque, a duration of the braking event and a vehicle speed. In order to precisely estimate the energy quantity being necessary for removing the amount of corrosion, a look-up table may be used. This look-up table may be generated during experiments, wherein different amounts of brake energy are applied and the resulting corrosion removal is determined by assessing a mass reduction of the brake disc or the brake drum in a laboratory or by assessing a reduction in surface roughness of the brake disc. The method for estimating a corrosion condition decrease may use a current amount of corrosion as an input parameter, e.g. the thickness of a corrosion layer on the brake disc. The use of a method for estimating a corrosion condition decrease allows to estimate how much corrosion on the brake discs or on the brake drums was removed by using the brakes. This, in turn, reduces the thickness of a corrosion layer on the brake disc. This may be used to derive a resulting thickness of a corrosion layer on the brake disc, for example. This facilitates appropriate cleaning of the brake disc or the brake drum without compromising energy efficiency more than necessary.

The method for estimating a corrosion condition decrease may be adapted according to the needs of the customer and the specific needs of the market. In the case the method for estimating a corrosion condition decrease does not reflect the actual decrease of corrosion, it may be adapted at a workshop.

In an example, the method for estimating a corrosion condition decrease may consider one or more of the following parameters: vehicle driving speed, wheel angular velocity, brake disc or the brake drum temperature and braking torque on the wheels. Additionally, the method for estimating a corrosion condition decrease may be adapted to consider the amount of electric parking brake (EPB) applications, as the residual pressure after releasing the electric parking brake causes a residual drag, which in turn removes corrosion. Other sources of brake drag, additional to EPB applications, such as brake drag resulting from hydraulic applications, may also be included to estimating a corrosion condition decrease. These parameters are highly suitable for estimating the amount of corrosion on the brake disc or the brake drum that is being removed by using the foundation brake. As explained above, the method for estimating a corrosion condition decrease may make use of the fact that the brake energy of the foundation brake is a function of a normal brake force between the brake pads and the corresponding brake disc or the brake drum taking the friction coefficient into account, the brake torque, a duration of the braking event and a vehicle speed. The foundation brake essentially transforms the kinetic energy of the vehicle into thermal or frictional energy. Thus, considering these parameters allows to precisely estimate a corrosion condition decrease.

The method for determining a need for cleaning a brake disc or the brake drum may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

The problem is further at least partially solved or alleviated by a method for operating a brake system comprising a brake disc. The method comprises:
- determining a need for cleaning a brake disc or a brake drum using the method for determining a need for cleaning a brake disc or a brake drum according to the present disclosure, and
- causing use of friction braking for cleaning the brake disc, if a need for cleaning the brake disc or the brake drum is determined.

Thus, using this method, a need for cleaning the brake disc or the brake drum may be precisely determined and the brake disc or the brake drum may be cleaned if needed. Moreover, cleaning the brake disc or the brake drum prematurely or overdue is reliably avoided.

Both before and after the use of friction braking for cleaning the brake disc, it is possible that braking is performed by recuperation braking. There may be a specified minimum delay between the end of the use of friction braking and the start of the use of recuperation braking and also a specified minimum delay between the end of the use of recuperation braking and the start of the use of friction braking.

If the method for determining a need for cleaning a brake disc or a brake drum returns that there is no need for cleaning the brake disc, the method for operating the brake system may not cause use of friction braking for cleaning the brake disc. Instead, the method for operating the brake system may wait for a predefined time period and then re-start by executing the step of determining a need for cleaning a brake disc. Alternatively, the method for operating the brake system may wait for a predefined event to occur, e.g. a start of a new driving cycle.

In an example, if a need for cleaning the brake disc or the brake drum is determined, notification data indicative of brake cleaning progress can be obtained. This makes it possible, for example, to generate a notification that states that a brake cleaning progress is in progress.

In an example, if a need for cleaning the brake disc or the brake drum is determined, the driver may select if he/she wants a brake cleaning progress to be performed or to wait. The driver may also request additional brake cleaning progress to be performed.

In an example, a need for cleaning a brake disc or a brake drum could be determined if the estimated thickness of a corrosion layer on the brake disc or the brake drum exceeds a predefined corrosion layer thickness threshold. The amount of the predefined corrosion layer thickness threshold may may be 5µm. If a predefined corrosion layer thickness threshold is exceeded, a need for cleaning a brake disc or a brake drum can be determined.

It is conceivable that friction braking for cleaning the brake disc or the brake drum is to be performed in a situation when braking is requested by a driver of the vehicle comprising the brake system. This especially enhances the energy efficiency in comparison to a situation in which brake disc cleaning or brake drum cleaning is performed when no actual braking is requested.

In an example of the method for operating a brake system the use of friction braking is caused under one or more of the following conditions:
- a driving speed exceeds a predefined driving speed threshold,
- a brake disc or a brake drum temperature is below a first predefined brake disc or brake drum temperature threshold,
- a braking torque exceeds a predefined torque threshold.

In this context, the consideration of the driving speed prevents the process from being carried out at speeds that are too low and at which no effective corrosion removal would be possible and, under certain circumstances, driving comfort might be negatively affected. The consideration of the brake disc or the brake drum temperature prevents the brake disc and the brake pads respectively the brake drum and the brake shoes from overheating. The brake disc or the brake drum temperature may be estimated, predicted and/or measured. When the brake disc or the brake drum temperature exceeds a first predefined brake disc or the brake drum temperature threshold, it is conceivable that recuperation braking is used instead of the use of friction braking until the brake disc or the brake drum temperature is at least below the first predefined brake disc or the brake drum temperature threshold. By performing the friction braking under the first predefined brake disc or the brake drum temperature threshold, transition between red and black corrosion is prevented. The consideration of the braking torque prevents the process likewise from being carried out during very light braking processes at which no effective corrosion removal would be possible, and driving comfort could be affected negatively under certain circumstances.

Additionally, in an example of the method for operating a brake system, the use of friction braking may be caused if the energy of the battery spent when friction braking is used should not exceed pre-determined value. This ensures that it is possible to control the impact of the function on the battery range of the vehicle.

In an example, the method for operating a brake system can further comprise monitoring a cleaning stop condition and causing stopping of the use of friction braking if a predefined cleaning stop threshold is met. Here it would be conceivable that the predefined cleaning stop threshold corresponds to a corrosion layer thickness on the brake disc. The predefined cleaning stop threshold may be selected with regard to properties such as the profile and/or coarseness of the brake disc. The threshold may be higher than deviations in the surface of the brake disc or the brake drum such that the risk of scratching the brake disc or the brake drum is reduced. The predefined cleaning stop threshold may be 2µm of the corrosion layer thickness on the brake disc. In order to be able to know when the predefined cleaning stop threshold is reached, a method for estimating a corrosion condition decrease on the brake disc or the brake drum may be used. This makes it possible to estimate when the predefined cleaning stop threshold is met by friction braking. Thus, friction braking is only caused when needed for cleaning the brake disc. This enhances energy efficiency.

The method for operating a brake system may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

The problem is further at least partially solved or alleviated by a data processing device comprising means for carrying out the method for determining a need for cleaning a brake disc or a brake drum of the present disclosure and/or comprising means for carrying out the method for operating a brake system. Such a data processing device ensures effective cleaning of the brake disc or the brake drum and improves the energy efficiency of the corresponding vehicle at the same time.

The problem is further at least partially solved or alleviated by a computer program comprising instructions which, when the computer program is executed by a computer, cause the computer to carry out the method for determining a need for cleaning a brake disc or a brake drum of the present disclosure and/or cause the computer to carry out the method for operating a brake system method for operating a brake system. Such a computer program also ensures effective cleaning of the brake disc or the brake drum and improves the energy efficiency of the corresponding vehicle at the same time.

The problem is further at least partially solved or alleviated by a computer-readable storage medium comprising instructions which, when executed by a computer, cause the computer to carry out the method for determining a need for cleaning a brake disc or a brake drum of the present disclosure and/or cause the computer to carry out the method for operating a brake system method for operating a brake system. Such a computer-readable storage medium ensures effective cleaning of the brake disc or the brake drum and improves the energy efficiency of the corresponding vehicle at the same time as well.

The problem is further at least partially solved or alleviated by a vehicle comprising a data processing device of the present disclosure. In such a vehicle effective cleaning of the brake disc or the brake drum is ensured. At the same time, energy efficiency is enhanced.

It should be noted that the above examples may be combined with each other irrespective of the aspect involved.

These and other aspects of the present invention will become apparent from and elucidated with reference to the examples described hereinafter.

### BRIEF DESCRIPTION OF DRAWINGS

Examples of the invention will be described in the following with reference to the following drawings:
- Fig. 1: shows a vehicle according to the present disclosure comprising a data processing device according to the present disclosure, wherein a method according to the present disclosure for operating a brake system and a method according to the present disclosure for determining a need for cleaning a brake disc or a brake drum may be executed using the data processing device,
- Fig. 2: shows the computer program according to the present disclosure in a schematic representation, wherein also input parameters and output parameters are represented,
- Fig. 3: illustrates steps of the method of the present disclosure for operating a brake system and the method of the present disclosure for determining a need for cleaning a brake disc, and
- Fig. 4: shows a temperature chart with exemplary limit values and switching values, wherein the temperature chart is used in the method of the present disclosure for determining a need for cleaning a brake disc.

### DETAILED DESCRIPTION

The figures are merely schematic representations and serve only to illustrate examples of the invention. Identical or equivalent elements are in principle provided with the same reference signs.

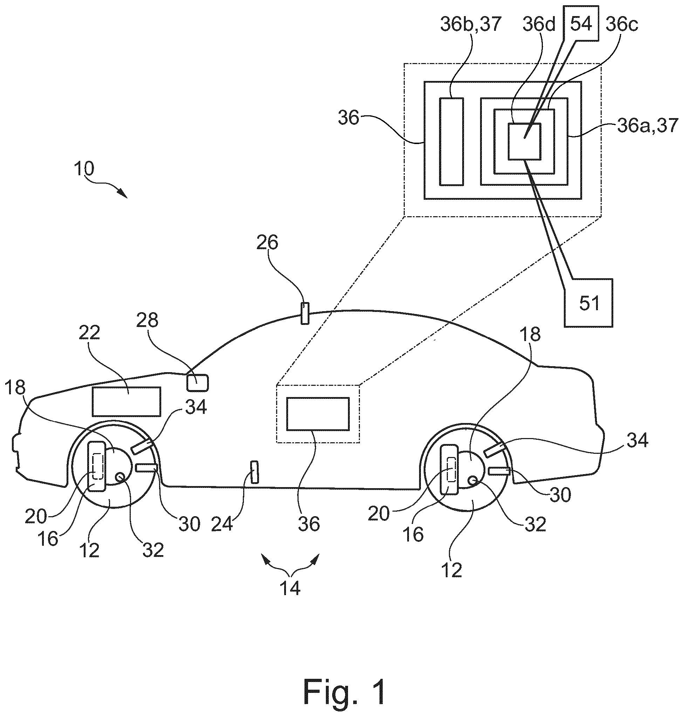

Figure 1 shows a vehicle 10 comprising wheels 12 and a brake system 14 for applying a braking force to the wheels 12.

The brake system 14 comprises a foundation brake 16 for friction braking. The foundation brake 16 comprises a brake disc 18 and brake pads 20 for each wheel 12. Thus, the foundation brake 16 is associated with the wheels 12. It is also conceivable that the foundation brake 16 comprises alternatively or additionally a brake drum and an associated brake shoe. In particular, it is conceivable that brake discs 18 with brake pads 20 are provided on one of the axles of the vehicle 10 and brake drums and a brake shoes are provided on the other axle. Accordingly, the following explanations on the brake disc 18 can be applied analogously to a brake drum and the explanations on the brake pads 20 can be applied analogously to brake shoes.

Furthermore, the vehicle 10 comprises an electric machine 22 which is only represented schematically in Figure 1. The electric machine 22 is coupled to at least two of the wheels 12, wherein the at least two wheels 12 are associated with the same axle.

The electric machine 22 is configured to drive the at least two wheels 12 in a drive mode. Additionally, the electric machine 22 is configured to apply a braking force or braking torque to the at least two wheels 12 in a recuperation mode. In the recuperation mode, the electric machine 22 is operated as an electric generator. Consequently, the electric machine 22 forms part of the brake system 14 at least when in the recuperation mode.

Furthermore, the vehicle 10 comprises the following sensors: an ambient temperature sensor 24 for detecting an ambient temperature, an ambient humidity sensor 26 for detecting an ambient humidity, a vehicle driving speed sensor 28 for detecting the driving speed of the vehicle 10, a wheel angular velocity sensor 30 for detecting the angular velocity of each of the wheels 12, a brake disc temperature sensor 32 for detecting the temperature of each of the brake discs 18 and a braking torque sensor 34 for detecting the braking torque on at least one of the wheels 12. In this context, system temperature shall not only be regarded as the brake disc temperature, several sensors may be used to quantify system temperature, such as brake pad temperature sensor, airflow temperature sensor, housing temperature sensor, wheel temperature sensor, tire temperature sensor and/ or optical temperature sensor. System temperature may also be modeled from above temperature sensor sources and/ or vehicle parameters.

It is noted that all of the above-mentioned sensors are represented schematically only. Moreover, each of the above-mentioned sensor may be realized as a physical sensor, i.e. a physical device. Alternatively, one or more of the above-mentioned sensor may be realized as a software component. For example, the braking torque sensor 34 may be a software component configured for determining the braking torque.

In addition, the vehicle 10 comprises a data processing device 36.

The data processing device 36 comprises a data storage unit 36a and a data processing unit 36b.

The data storage unit 36a comprises a computer-readable storage medium 36c.

On the computer-readable storage medium 36c, there is provided a computer program 36d.

The computer program 36d and, thus, also the computer-readable storage medium 36c, comprise instructions which, when executed by the data processing unit 36b, or, more generally speaking, a computer, cause the computer or the data processing unit 36b to carry out a method for operating a brake system and a method for determining a need for cleaning a brake disc.

Consequently, the data storage unit 36a and the data processing unit 36b form means 37 for carrying out the method for operating the brake system 14 and a method for determining a need for cleaning a brake disc 18.

In the present example, the data processing device 36 is communicatively coupled to the components of the vehicle 10, in particular the brake system 14, the electric machine 22 and the sensors 22-34.

It is noted that even though in the present example, the data processing device 36 forms part of the vehicle 10, it is also possible that the data processing device 36 is provided outside the vehicle 10. In the latter case, the data processing device 36 may be wirelessly coupled to the components of the vehicle 10, in particular the brake system 14, the electric machine 22 and the sensors 22-34.

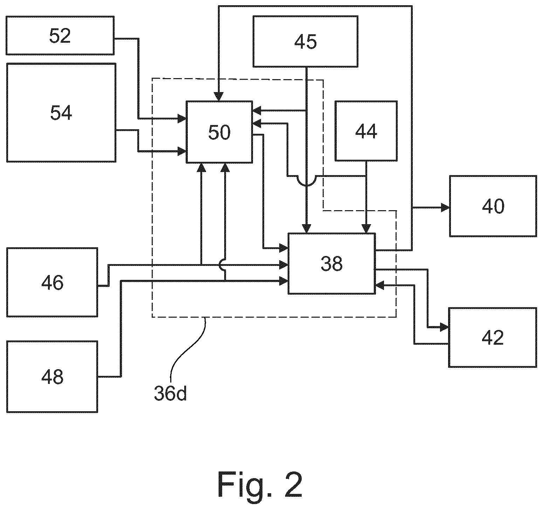

Figure 2 shows the computer program 36d in a schematic representation.

The computer program 36d comprises a brake force allocation unit 38.

The brake force allocation unit 38 is communicatively connected to a foundation brake controller 40 for the foundation brake 16 and an electric traction machine controller 42.

The brake force allocation unit 38 and its connections are configured such that the brake force allocation unit 38 is able to selectively send a brake force request to the foundation brake controller 40 and/or to the electric traction machine controller 42.

The brake force allocation unit 38 is further configured to obtain a driving speed 44, a brake disc temperature 46 and a braking torque 48.

The driving speed 44 may be obtained from the vehicle driving speed sensor 28. Furthermore, a wheel angular velocity 45 may be obtained from the wheel angular velocity sensor 30 and a brake disc temperature 46 may be obtained from the brake disc temperature sensor 32. It is also conceivable that the braking torque 48 is provided by the braking torque sensor 34 on the wheels 12.

Alternatively, it is also possible for the driving speed 44, the wheel angular velocity 45, the brake disc temperature 46 and/or the braking torque 48 to be partially or completely estimated by calculation, i.e. by a software component.

Moreover, the data processing device 36 comprises a corrosion prediction unit 50.

The corrosion prediction unit 50 is configured such that at least two methods for estimating a corrosion condition of the brake disc 18 and a method for estimating a corrosion condition decrease of a corrosion condition of the brake disc 18 may be executed thereon. All methods are configured for estimating a thickness of a corrosion layer on the brake disc 18.

Furthermore, the corrosion prediction unit 50 is configured to receive a time parameter 52, first data 54 indicative of an environmental condition of the brake disc 18 and a value relating to ambient humidity.

In the present example, the first data 54 is indicative of an ambient temperature and an ambient temperature history.

The ambient temperature history refers to a time series of temperature values, e.g. having the form of a temperature profile. Thus, the ambient temperature history may include several ambient temperature values. The ambient temperature may be obtained from the ambient temperature sensor 24. The ambient temperature history may be obtained from an intermediate memory or by the corrosion prediction unit 50 itself, by continuously storing first data 54 in the form of obtained ambient temperatures in conjunction with the associated time parameter 52.

Each of the at least two methods for estimating a corrosion condition of the brake disc 18 are using a corrosion formation model. The corrosion formation model is configured for estimating an amount of corrosion based on one or more input parameters indicative of an environmental condition of the brake disc 18.

Input parameters indicative of an environmental condition of the brake disc 18 of the corrosion formation model are for each of the two methods for estimating a corrosion condition of the brake disc 18 are the time parameter 52 and the ambient temperature.

Further, a first method of the two methods for estimating a corrosion condition of the brake disc 18 considers ambient salt for estimating the corrosion condition. At the same time the first method does not consider ambient humidity for estimating the corrosion. This method for estimating a corrosion condition of the brake disc 18 may be referred to as a winter method or a winter mode. This is due to the fact that during winter time, ambient salt is a relevant factor, whereas ambient humidity is less important.

Moreover, the second method of the two methods for estimating a corrosion condition of the brake disc 18 considers the ambient humidity for estimating the corrosion. In the present example the ambient humidity is considered to be 100% when rain is detected and up to 60% if no rain is detected. At the same time, the second method does not consider ambient salt for estimating the corrosion. This method for estimating a corrosion condition of the brake disc 18 may be referred to as a summer method or a summer mode. This is due to the fact that during summer time, usually there is no ambient salt in the environment in which the vehicle is operated. However, ambient humidity is an important factor at summer time temperatures.

Every time one of the methods for estimating a corrosion condition of the brake disc 18 is used, second data 51 indicative of a corrosion condition of the brake disc 18 is obtained using the corrosion prediction unit 50.

The second data 51 may be stored on the corrosion prediction unit 50 itself, for example.

The method for estimating a corrosion condition decrease predicts an amount of corrosion which is removed from the brake disc 18 when the foundation brake 16 is used. By the method for estimating a corrosion condition decrease the corrosion prediction unit 50 obtains third data indicative of a decrease of a corrosion condition.

For this purpose, corrosion prediction unit 50 is configured for receiving a brake request for the foundation brake controller 40 as an input parameter.

Further, input parameter for the method for estimating a corrosion condition decrease may be the vehicle driving speed 44, the wheel angular velocity 45, the brake disc temperature 46 and the braking torque 48 on the wheels 12. For this the method for estimating a corrosion condition decrease may evaluate the brake request for the foundation brake controller 40.

Every time the method for estimating a corrosion condition decrease is used, third data indicative of a decrease of a corrosion condition of the brake disc 18 is obtained using the corrosion prediction unit 50.

Since on the corrosion prediction unit 50 both the two methods for estimating a corrosion condition of the brake disc 18 and the method for estimating a corrosion condition decrease of a corrosion condition of the brake disc 18 are executed, the corrosion prediction unit 50 is able to always provide an estimation of a current amount of corrosion, e.g. the resulting thickness of a corrosion layer on the brake disc 18, being present on the brake disc 18.

The corrosion prediction unit 50 is connected to the brake force allocation unit 38 such that the estimation of the current amount of corrosion may be communicated from the corrosion prediction unit 50 to the brake force allocation unit 38. Further a need for cleaning a brake disc may be communicated from the corrosion prediction unit 50 to the brake force allocation unit 38.

It is noted that even though the corrosion prediction unit 50 and the brake force allocation unit 38 are shown as parts of the same data processing device 36 in the present example, it is alternatively possible to implement the corrosion prediction unit 50 and the brake force allocation unit 38 on different data processing devices which are communicatively coupled.

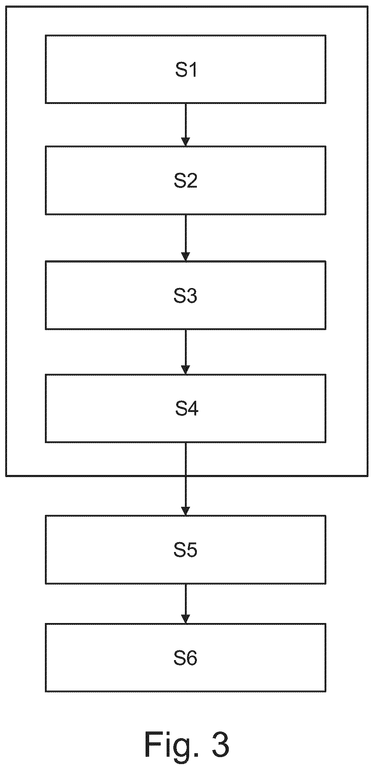

The data processing device 36, thus, is configured for carrying out the method for determining a need for cleaning a brake disc (cf. Figure 3). The method is executed when starting the vehicle 10.

This method comprises a first step S1 which consists in obtaining first data 54 indicative of an environmental condition of the brake disc 18. The first data 54 is indicative of the ambient temperature and the ambient temperature history and obtained by the corrosion prediction unit 50 from the ambient temperature sensor 24, as explained above.

The method for estimating a corrosion condition of the brake disc 18 is always selected on the basis of the first data 54 at the time of starting the vehicle and before a drive cycle.

In a second step S2 one method for estimating a corrosion condition of the brake disc 18 is selected out of two methods for estimating a corrosion condition of the brake disc 18 based on the first data 54.

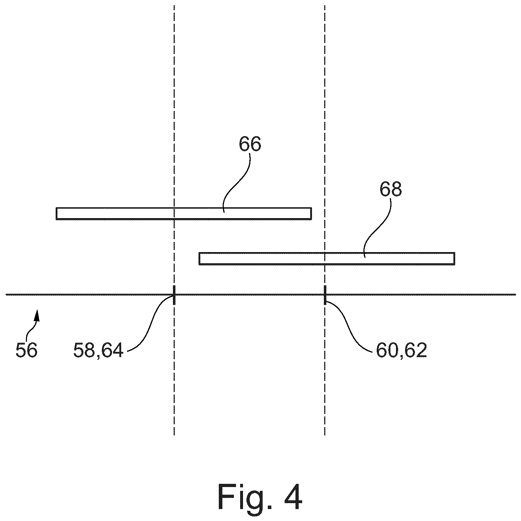

This will be explained in more detail on the basis of Figure 4.

Figure 4 shows a temperature chart 56. On the temperature chart 56 a first limit value 58, a second limit value 60, a first switching value 62 and a second switching value 64 are defined. All of these values are temperature values.

The method for estimating a corrosion condition of the brake disc 18 is selected based on the first data 54 as follows.

If the ambient temperature is below the first limit value 58, for example 0 °C, or if the ambient temperature history includes only ambient temperature values which are below the first limit value 58, the first method for estimating a corrosion condition of the brake disc 18 is selected. In the present example this is the winter method.

If the ambient temperature history includes ambient temperature values that are lower than the first limit value 58, but also ambient temperature values that exceed the first limit value 58 and are lower than the first switching value 62 for example 10 °C, also the first method for estimating a corrosion condition of the brake disc 18 is selected, i.e. also the winter method is used. The mentioned temperature values are represented by a by bar 66 in the temperature chart 56.

An optional additional condition for selecting the first method may be that in the ambient temperature history, the older temperatures are lower than the younger temperatures. This means that the ambient temperature history shows a trend of increasing temperatures.

If the ambient temperature exceeds the second limit value 60, for example 10 °C, or if the ambient temperature history includes only ambient temperature values which exceed the second limit value 60, the second method for estimating a corrosion condition of the brake disc is selected. In the present example this is the summer method.

If the ambient temperature history includes ambient temperature values that exceed the second limit value 60, but also ambient temperature values that are lower than the second limit value 60 and exceed the assigned second switching value 64, for example 0 °C, also the second method for estimating a corrosion condition of the brake disc is selected, i.e. also the summer method is used. The mentioned temperature values are represented by a by bar 68 in the temperature chart 56.

An optional additional condition for selecting the second method may be that in the ambient temperature history, the older temperatures are higher than the younger temperatures. This means that the ambient temperature history shows a trend of decreasing temperatures.

If the ambient temperature and all ambient temperature values of the ambient temperature history lie between the first switching value 62 and second switching value 64, the method for estimating a corrosion condition of the brake disc 18 may be selected based on a former ambient temperature history or solely on the basis of the current ambient temperature.

Subsequently, a third step S3 (cf. Figure 3) is executed which comprises obtaining the second data 51 indicative of a corrosion condition of the brake disc 18 using the selected method for estimating a corrosion condition of the brake disc 18. By means of the selected method for estimating a corrosion condition of the brake disc 18, for example, the thickness of a corrosion layer on the brake disc 18 may be estimated.

Since these steps are carried out once every time the vehicle is started, they may be carried out several times, i.e. each time the vehicle is started.

In addition, when the foundation brake 16 is used, a reduction in the thickness of a corrosion layer on the brake disc 18 is taken into account. Here, according to the explanations above, the method for estimating a corrosion condition decrease is used to on the corrosion prediction unit 50 such that the third data indicative of a decrease of a corrosion condition is obtained.

Consequently, the current corrosion condition of the brake disc 18 or the thickness of a corrosion layer on the brake disc 18 is always known.

Based on the second data 51, a fourth step S4 is executed. In the fourth step S4, a need for cleaning the brake disc 18 is obtained. A need for cleaning a brake disc could be determined, if the estimated thickness of a corrosion layer on the brake disc 18 exceeds a predefined corrosion layer thickness threshold. The amount of the predefined corrosion layer thickness threshold may be 5µm.

The data processing device 36 is further configured for carrying out the method for operating a brake system 14 comprising a brake disc (cf. Figure 3).

This method determines the need for cleaning a brake disc by using the method for determining a need for cleaning a brake disc comprising steps S1 to S4 as has been explained above. Thus, the steps S 1 to S4 may be seen as a first step of the method for operating a brake system 14.

The brake force allocation unit 38 starts a use of friction braking for cleaning the brake disc once or as long as, a driving speed exceeds a predefined driving speed threshold, the brake disc temperature 46 is below a first predefined brake disc temperature threshold, and a braking torque 48 exceeds a predefined torque threshold. By performing the friction braking under the first predefined brake disc temperature threshold, transition between red and black corrosion is prevented.

This constitutes a fifth step S5, wherein for the ease of explanation, the initial numbering is continued. Alternatively, this step may be seen as a second step of the method for operating a brake system 14.

In a further step, i.e. a sixth step S6 if continuing the numbering, a cleaning stop condition is monitored and stopping of the use of friction braking is caused if a predefined cleaning stop threshold is met. In order to know when the predefined cleaning stop threshold is reached, a method for estimating a corrosion condition decrease on the brake disc may also be used here. This has already been explained above.

It is noted that the sixth step S6 may as well be seen as a third step of the method for operating a brake system 14.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples may be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: wheels
- 14: brake system
- 16: foundation brake
- 18: brake disc
- 20: brake pads
- 22: electric machine
- 24: ambient temperature sensor
- 26: ambient humidity sensor
- 28: vehicle driving speed sensor
- 30: wheel angular velocity sensor
- 32: brake disc temperature sensor
- 34: braking torque sensor on the wheels.
- 36: data processing device
- 36a: data storage unit
- 36b: data processing unit
- 36c: computer-readable storage medium
- 36d: computer program
- 37: means for carrying out a method for operating a brake system and a method for determining a need for cleaning a brake disc
- 38: brake force allocation unit
- 40: foundation brake controller
- 42: electric traction machine controller
- 44: driving speed
- 45: wheel angular velocity
- 46: brake disc temperature
- 48: braking torque
- 50: corrosion prediction unit
- 51: second data
- 52: time parameter
- 54: first data
- 56: temperature scale
- 58: first limit value
- 60: second limit value
- 62: first switching value
- 64: second switching value
- 66: bar
- 68: bar

- S 1: first step
- S2: second step
- S3: third step
- S4: fourth step
- S5: fifth step
- S6: sixth step

## Claims

1. A method for determining a need for cleaning a brake disc (18) or a brake drum, the method comprising
- obtaining first data (54) indicative of an environmental condition of the brake disc (18) or the brake drum (S1),
- selecting one method for estimating a corrosion condition of the brake disc (18) or the brake drum out of at least two methods for estimating a corrosion condition of the brake disc (18) or the brake drum based on the first data (54) (S2),
- obtaining second data (51) indicative of a corrosion condition of the brake disc (18) or the brake drum using the selected method for estimating a corrosion condition of the brake disc (18) or the brake drum (S3), and
- obtaining a need for cleaning the brake disc (18) or the brake drum based on the second data (51) (S4).

2. The method according to claim 1, wherein the first data (54) is indicative of an ambient temperature and/or an ambient temperature history.

3. The method according to any one of the preceding claims, wherein each of the at least two methods for estimating a corrosion condition of the brake disc (18) or the brake drum comprises using a corrosion formation model, the corrosion formation model configured for estimating an amount of corrosion based on one or more input parameters indicative of an environmental condition of the brake disc (18) or the brake drum.

4. The method according to any one of the preceding claims, wherein the at least two methods for estimating a corrosion condition of the brake disc (18) or the brake drum differ in the consideration of ambient humidity for estimating the corrosion condition and/or differ in the consideration of ambient salt for estimating the corrosion condition.

5. The method according to any one of the preceding claims, wherein all of the at least two methods for estimating a corrosion condition of the brake disc (18) or the brake drum consider an ambient temperature.

6. The method according to any one of the preceding claims, wherein all of the at least two methods for estimating a corrosion condition of the brake disc (18) or the brake drum are configured for estimating a thickness of a corrosion layer on the brake disc (18) or the brake drum.

7. The method according to any one of the preceding claims, further comprising obtaining third data indicative of a decrease of a corrosion condition of the brake disc (18) or the brake drum using a method for estimating a corrosion condition decrease.

8. The method according to claim 7, wherein the method for estimating a corrosion condition decrease considers one or more of the following parameters: vehicle driving speed (44), wheel angular velocity, brake disc or brake drum temperature (46) and braking torque on the wheels (12).

9. A method for operating a brake system (14) comprising a brake disc (18) or a brake drum, the method comprising
- determining a need for cleaning a brake disc (18) or a brake drum using the method according to any one of the preceding claims, and
- causing use of friction braking for cleaning the brake disc (18) or the brake drum, if a need for cleaning the brake disc (18) or the brake drum is determined (S5).

10. The method according to claim 9, wherein the use of friction braking is caused under one or more of the following conditions:
- a driving speed (44) exceeds a predefined driving speed threshold,
- a brake disc or a brake drum temperature (46) is below a first predefined brake disc or brake drum temperature threshold,
- a braking torque 48 exceeds a predefined torque threshold.

11. The method according to claim 9 or 10, further comprising monitoring a cleaning stop condition and causing stopping of the use of friction braking if a predefined cleaning stop threshold is met.

12. A data processing device (36) comprising means (37) for carrying out the method of claims 1 to 8 and/or comprising means (37) for carrying out the method of claim 9 to 11.

13. A computer program (36d) comprising instructions which, when the computer program (36d) is executed by a computer, cause the computer to carry out the method of claims 1 to 8 and/or cause the computer to carry out the method of claims 9 to 11.

14. A computer-readable storage medium (36c) comprising instructions which, when executed by a computer, cause the computer to carry out the method of claims 1 to 8 and/or cause the computer to carry out the method of claims 9 to 11.

15. A vehicle (10) comprising a data processing device (36) according to claim 12.
